Europäisches Patentamt
European Patent Office
Office européen des brevets

(11) Publication number: 0 275 651 A1

# EUROPEAN PATENT APPLICATION

(21) Application number: 87310721.3

(22) Date of filing: 04.12.87

(51) Int. Cl.4: C23F 11/10 , E21B 41/02

(30) Priority: 02.01.87 US 250

(43) Date of publication of application: 27.07.88 Bulletin 88/30

(84) Designated Contracting States: BE DE ES FR GB IT NL

(71) Applicant: PETROLITE CORPORATION
369 Marshall Avenue
Saint Louis Missouri 63119(US)

(72) Inventor: Hausler, Rudolf H.
1812 Bopp Road
St. Louis Missouri 63131(US)
Inventor: Alink, Bernardus A.
10557 Larkspur Drive
St. Louis Missouri 63123(US)
Inventor: Johns, Marshall E.
13109 D'Artagnan Court
St. Louis Missouri 63141(US)
Inventor: Stegmann, Donald W.
7031 Pershing
St. Louis Missouri 63130(US)

(74) Representative: Seaborn, George Stephen et al
c/o Edward Evans & Co. Chancery House
53-64 Chancery Lane
London WC2A 1SD(GB)

## (54) Carbon dioxide corrosion inhibiting composition and method of use thereof.

(57) Compositions comprising a trithione and a suitable dispersant are effective $CO_2$ corrosion inhibitors in oil and gas wells characterized as sweet systems, particularly in deep hot gas wells characterized as sweet systems.

EP 0 275 651 A1

Xerox Copy Centre

# CARBON DIOXIDE CORROSION INHIBITING COMPOSITION AND METHOD OF USE THEREOF

## BACKGROUND OF THE INVENTION

### 1. Field of the Invention

This invention relates to inhibition of corrosion of steel, iron and other ferrous metals which are exposed to the hostile environments of oil and gas production systems and, especially, of such hydrocarbon production systems characterized as "sweet", i.e., well and flowlines wherein the environment comprises a high concentration of carbon dioxide, the pH is from about 2 to about 6 and the amount of $H_2S$ present is such that the $CO_2$ corrosion mechanism is predominant.

More particularly, the present invention relates to inhibition of $CO_2$ corrosion in oil and gas production tubing and to the use of corrosion inhibiting compositions which comprise a trithione and a suitable dispersant.

Carbon dioxide is a naturally occurring component in many oil and gas fields and, when $CO_2$ and water are produced with oil and/or gas, severe corrosion results in downhole and surface production equipment. Dry $CO_2$ is non-corrosive to metals and alloys. In the presence of liquid water, $CO_2$ forms carbonic acid which is highly corrosive. In fact, a solution saturated with $CO_2$ at 1 bar is many times more corrosive than hydrochloric acid at equal pH. Since most oil and gas production has either formation or condensed water associated therewith, the presence of $CO_2$ in a well is very detrimental.

The severity of $CO_2$ corrosion and its economic impact on oil and gas producing operations was first recognized in gas condensate wells in 1943. Since that time, numerous attempts have been made to eliminate the $CO_2$ corrosion problems, including using production tubing having a protective coating such as a thin film phenolic or expoxy-phenolic resin coating or expensive high alloy stainless steels; using non-metallic materials to fabricate the production tubing; and utilizing corrosion inhibitors. Use of corrosion inhibitors is the most practical, economical and generally accepted method for reducing or eliminating problems associated with $CO_2$ corrosion.

Most of the inhibitors used in the oil industry are organic chemicals which adsorb strongly on the metal surface of the production tubing and promote the formation of a protective oil film. These organic inhibitors normally have at least one highly polar group, which attaches to the metal surface, and a non-polar oil-soluble "tail" which facilitates formation of the protective oil film.

The effectiveness of an inhibitor depends on many factors, but in order for it to have a chance of being effective, it must reach the metal surface which is to be protected. In oil and gas wells wherein $CO_2$ corrosion is a problem, the inhibitor must penetrate a water layer in order to reach the metal surface of the production tubing. Thus, corrosion inhibitors for use in oil and gas wells characterized as sweet systems must be either water-dispersible or water soluble. The water dispersible corrosion inhibitors are either surface active in themselves or are formulated with a surfactant or other additive to aid the inhibitor in reaching and/or adsorbing on the metal surface of the production tubing by varying its relative solubility in the water phase or by increasing dispersability. In practice there are distinct advantages for not using surface active inhibitors. One such advantage is that an inhibitor can be formulated with a surfactant such that the surfactancy of the formulation can be adjusted within desirable limits. Obviously, the mechanisms involved in inhibitor transfer to the solid surface vary from one inhibitor to another and from one dispersant to another and it is nearly impossible to predict whether one dispersant or one class of dispersants will aid a particular inhibitor in penetrating the water layer to reach the metal surface.

In order for a corrosion inhibitor to effectively solve the most severe problems associated with $CO_2$ corrosion, such inhibitor must provide at least 99% protection and, preferably, at least 99.5% protection. Obviously, such inhibitors are rare. As indicated above, the effectiveness of an inhibitor depends on many factors, and such factors are unique to each system to be treated. These factors are so unique that, despite theoretical considerations, selection of $CO_2$ corrosion inhibitors continues to be entirely empirical and unpredictable. Furthermore, there are numerous secondary properties of corrosion inhibitors which must be taken into account in selecting $CO_2$ corrosion inhibitors. Such secondary properties include thermal stability, flowability, foaming characteristics, and emulsion tendencies.

It has now been discovered that a class of sulfur compounds known as trithiones provide sufficient protection against $CO_2$ corrosion to effectively solve, and in most cases substantially eliminate, the problems associated with $CO_2$ corrosion. It has also been discovered that such compounds penetrate the water layer associated with the metal surface of production tubing when a suitable dispersant is combined

therewith. Prior to the subject invention, it was thought that in order to utilize trithiones as corrosion inhibitors in oil and gas wells, the trithiones must be made water soluble. Thus, the present invention resides in the discovery that the trithiones can be made water dispersible and that particular classes of dispersants are suitable therefor. The combination of a trithione with a suitable dispersant produces a composition which provides 99.5+% protection and is non-emulsifying and non-foaming and has excellent thermal stability and flowability characteristics.

2. Prior Art

Trithiones are known to inhibit corrosion in highly concentrated HCl systems wherein the pH is well below pH1 but such compounds are not effective when used alone in dilute HCl systems wherein the pH is between about 2 and about 6. Furthermore, trithiones in combination with dispersants are not effective in dilute HCl systems.

U.S. Patent No. 3,697,221 discloses quaternized trithiones which are water soluble and are useful as corrosion inhibitors in aqueous and/or aerated and/or highly acidic systems.

U.S. Patent Nos. 3,791,789 and 3,959,313 disclose oxidized trithiones which are also useful as corrosion inhibitors in aqueous and/or aerated and/or acidic systems.

U.S. Patent No. 3,959,177 discloses combinations of trithiones or quats thereof with thiophosphates or pyrophosphates containing both oxygen and sulfur, which combinations are useful for inhibiting metal-loss corrosion, stress cracking, hydrogen embrittlement or blistering and corrosion fatigue.

U.S. Patent Nos. 3,957,925 and 3,984,203 discloses S-(3-thione-propene-1) thiophosphates which are useful as corrosion inhibitors.

U.S. Patent No. 4,190,727 discloses hydroxy-substituted dithioliums (oxidized trithiones) which are useful as corrosion inhibitors.

U.S. Patent Nos. 2,816,075, 2,816,116 and 2,905,696 disclose trithiones useful as corrosion inhibitors in lubricating oils.

U.S. Patent Nos. 3,345,380, 3,350,408 and 3,394,146 disclose methods of preparing particular trithiones.

Auslegeschrift No. 1,038,866 discloses salts of trithione derivatives which can be combined with wetting agents for use as corrosion inhibitors in aqueous solutions.

SUMMARY OF THE INVENTION

The present invention relates to inhibition of $CO_2$ corrosion of ferrous metals by contacting the metals with a composition comprising a trithione in an amount effective to inhibit $CO_2$ corrosion thereof.

The compositions which have been found to have utility as $CO_2$ corrosion inhibitors are those comprising a trithione and an effective amount of a suitable dispersant.

Accordingly, this invention is directed to $CO_2$ corrosion inhibiting compositions and to a method for inhibiting $CO_2$ corrosion of steel, iron and other ferrous metals.

DETAILED DESCRIPTION OF THE INVENTION

In accordance with the present invention, the compositions which have been found to have utility as $CO_2$ corrosion inhibitors are characterized by the presence of a trithione and a suitable dispersant.

Trithiones are known compounds which can be represented by the following general formula:

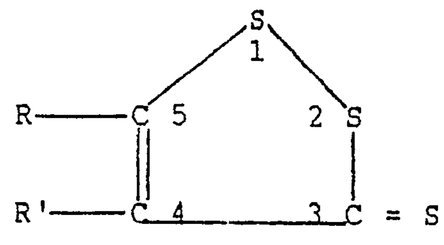

wherein R and R′ independently represent hydrogen and alkyl, aryl, cycloalkyl, alkenyl, alkynyl, alkaryl,

aralkyl. and heterocyclyl radicals and the like. The radicals may be substituted by groups known to those skilled in the art to assist corrosion inhibition without adversely affecting the secondary characteristics of the base inhibitor. Thus, the above-described radicals may be sulfonated, oxyalkylated, aminated, etc., according to methods well known in the art. These compounds are also known as 1,2-dithiole-3-thiones, dithiacyclopentene thiones, tropylenes and 1,2-dithia-3-thioxo-cyclopent-4-ene derivatives.

Examples of suitable trithiones and methods for their preparation are disclosed in THE CHEMISTRY OF HETEROCYCLIC COMPOUNDS, "Multi-Sulfur and Sulfur and Oxygen Five-and Six-Membered Heterocycles", Part 1, pages 237-386, by David S. Breslow et al., Interscience Publishers, 1966. Numerous examples of trithiones are presented in the Breslow text in Table 4, pages 352-366. Examples of suitable trithiones and their preparation are also disclosed in U.S. Patent No. 3,791,789. Each of these references is incorporated herein by reference. It is contemplated that other trithiones having characteristics similar to those disclosed in the references will also be suitable for use in the present invention.

Other examples include higher molecular weight trithiones wherein R and R' independently represent polyalkylenes, e.g., polyethylene, polypropylene, polybutylene, polyisobutylene, and the like. These high molecular weight trithiones can be utilized where it is desired that the trithione exhibit very high thermal stability, e.g., thermal stability above 100°C. Preferred trithiones include 4-neopentyl-5-t-butyl-1,2-dithiole-3-thione and 4-polyisobutylene 1,2-dithiole-3-thione.

The trithiones of the subject invention include only those having the C = S group. Thus, the quaternary salts and oxidized derivatives are expressly excluded. The C = S group is an important factor because it provides means for the trithiones to securely attach to the metal surface to provide a protective film which is relatively less susceptible to wash-off when subjected to high velocity conditions.

Dispersants suitable for use in the present compositions can be defined as any dispersant which will disperse a trithione in a layer of water to such an extent that the trithione is permitted to penetrate such water layer. Penetration of the water layer by the trithione allows such trithione to attach to the metal surface of the production tubing.

It has been found that dispersants which are particularly suitable are those which are either cationic, and remain cationic when subjected to the environment associated with oil and gas wells characterized as sweet systems, or those which are susceptible to protonation, i.e., become cationic, when exposed to a sweet system.

Dispersants which are cationic and remain cationic include quaternary amines, an example of which is coco trimethyl ammonium chloride. It is contemplated that other cationic dispersants such as, for example, quaternary pyridines, sulfonium salts and phosphonium salts are also suitable for use in the present invention. An exemplary quaternary amine is N-methyldodecylpyridinium methosulfate; an exemplary sulfonium salt is the sodium salt of dodecylsulfonate; and an exemplary phosphonium salt is the ammonium salt of dodecylphosphonate.

Dispersants which are susceptible to protonation when exposed to the subject systems include ethoxylated amines such as ethoxylated tallow amine. It is contemplated that other dispersants susceptible to protonation, such as, for example, Schiff's bases ($R_n$-N = CH-R), alkyl polyamines ($R_n$-NH-$(CH_2)_x$-NH-R), and betaines (organic bases characterized by the presence of a $R_3$N-C(R)COOH group) are also suitable for use in the present invention. An exemplary Schiff's base is the imine of formaldehyde and t-octylamine; an exemplary alkyl-polyamine is N-(ethylamino)dodecylamine; and an exemplary betaine is one derived from chloroacetic acid and N,N-dimethylcocoamine.

A preferred dispersant is coco trimethyl ammonium chloride which is a cationic dispersant and remains cationic when exposed to the subject systems.

The corrosion inhibiting compositions of this invention may be added to a well neat or as a solution thereof in an appropriate solvent, e.g., hydrocarbon solvent, and may be used in combination with other materials well known in anticorrosion formulations, e.g., biocides, oxygen scavengers, e.g., hydrazine, and the like. The subject compositions are preferably added to a well in an appropriate solvent, preferably a hydrocarbon solvent such as solvent 14 (xylene bottoms) and higher boiling solvents such as heavy aromatic solvents. The subject compositions are preferably injected downhole on a continuous basis using the solvent as a carrier.

It should be noted that where the high molecular weight trithiones, such as the polyisobutylene derivatives, are utilized, handling thereof is facilitated by adding a small but effective amount of a lower molecular weight trithione. Addition of the lower molecular weight trithione also facilitates dilution in the solvent utilized to carry the inhibitor composition downhole.

In general, a minor but effective amount of a trithione is employed to inhibit $CO_2$ corrosion in gas and oil wells and distribution systems, such as from about 1 to about 10,000 parts per million (ppm), preferably from about 500 to about 5,000 ppm, especially from about 20 to about 2,500 ppm, when added on a

continuous basis. Larger amounts will be used if added on a batch-wise basis.

The following non-limiting examples are for illustrative purposes only and represent the best mode of practice of the invention.

In the following examples, the kettle test is used at a constant pH to determine the efficiency of the corrosion inhibiting compositions of the present invention. The corrosion rates determined by this test are considered to be steady state and predictive of expected field corrosion rates under similar conditions. The efficiency of the dispersant alone (Ex. 4) was determined by the standard kettle test, i.e., floating pH.

Test Procedure

Utilizing a standard kettle, the temperature was maintained at about 55°C and $CO_2$ partial pressure was maintained at 1 bar. The medium utilized was distilled water and the pH was held constant at pH 3.8 by automatic injection of sulfuric acid. The solution was agitated at a rate of 800 rpm (estimated velocity of 3.5 m/sec.). The coupons utilized were sandblasted AISI-1018 coupons. A continuous $CO_2$ purge was maintained. Volume was one liter (volume to surface ratio was 37 cm). Duration was 24 hours. The corrosion rates were determined by iron analysis in solution for the period of from 2 to 24 hours.

Example 1

To a mixture of 320 grams of sulfur and 6 grams of di-o-tolylguanidine, 336 grams of triisobutylene was added over a nine hour period at a reaction temperature of about 210°-215°C. Heating at 210°-215°C was continued for an additional 14 hours. The product was distilled and 220 grams thereof were collected and the product identified as 4-neopentyl-5-t-butyl-1,2-dithiole-3-thione.

Example 2

A mixture of 172 grams of polyisobutylene (MW 460) and 60 grams of elemental sulfur was heated for 24 hours at 210°C. Hydrogen sulfide was evolved during this period. The resulting 194.7 grams of product showed 12.84% of covalently bound sulfur. The product was determined to be 4-isobutylene-1,2-dithiole-3-thione.

It is contemplated that other trithiones suitable for use in the practice of the present invention can be produced according to the procedures set forth in these examples.

The compounds of Examples 7-16 were formulated with the preferred suitable dispersant, namely, coco trimethyl ammonium chloride (50% solution in water) and one of the following suitable solvents; (1) Solvent 14 (xylene bottoms) along with a minor amount of isopropanol; (2) a high boiling aromatic solvent; or (3) a 20% solution of a polypropylene in Solvent 14.

These compounds were tested in accordance with the constant pH kettle test described above. The results are set forth in Table I below.

TABLE I

| Example # | % Trithione | % Dispersant | ppm Trithione + Dispersant | Solvent | steady state corrosion rate (mpy) | % Protection |
|---|---|---|---|---|---|---|
| 3 | ----- | ----- | ----- | ----- | 220 | ----- |
| 4* | ----- | 100 | 5 | neat | ----- | no effect |
| 5 | 100 (Ex1) | ----- | 50 | 1 | 138 | 37.27 |
| 6 | 100 (Ex1) | ----- | 100 | 1 | 105 | 52.27 |
| 7 | 90 (Ex1) | 10 | 50 | 1 | 0.58 | 99.74 |
| 8 | 90 (Ex1) | 10 | 75 | 1 | 0.2 | 99.91 |
| 9 | 90 (Ex1) | 10 | 100 | 1 | 0.53 | 99.76 |
| 10 | 92.5(Ex1) | 7.5 | 75 | 1 | 0.76 | 99.65 |
| 11 | 97.5(Ex1) | 2.5 | 75 | 1 | 0.5 | 99.77 |
| 12 | 90 (Ex1) | 10 | 50 | 3 | 0.67 | 99.70 |
| 13 | 90 (Ex1) | 10 | 100 | 3 | 0.70 | 99.68 |
| 14 | 90 (Ex2) | 10 | 20 | 1 | 21.3 | 90.32 |
| 15 | 90 (Ex2) | 10 | 50 | 1 | 0.7 | 99.68 |
| 16 | 90 (Ex2) | 10 | 100 | 1 | 0.9 | 99.59 |
| 17 | 90 (Ex1) | 10 | 50** | 1 | 92 | 58.18 |

*Standard Kettle Test used; floating pH.

**Polypropoxylated dipropylene glycol used as a dispersant instead of coco trimethyl ammonium chloride.

It is contemplated that other trithiones as hereinbefore described and other suitable dispersants as hereinbefore described will inhibit $CO_2$ corrosion to a similar degree.

In the following examples, the standard kettle test, i.e., floating pH, is utilized to demonstrate the efficacy of the dispersants of the subject invention as compared to other dispersants. Test conditions are the same as those of the above-described kettle test except that the pH is not held constant.

TABLE II

| Example # | % Trithione | Dispersant % | ppm | Solvent | Effectiveness |
|---|---|---|---|---|---|
| 18 | 100 | ----- | 50 | 1 | no effect |
| 19 | ----- | coco dimethyl amm. chloride (100%) | 5 | 1 | no effect |
| 20 | 90 | coco dimethyl amm. chloride (10%) | 50 | 1 | good |
| 21 | ----- | ethoxylated tallow amine (100%) | 5 | 1 | no effect |
| 22 | 90 | ethoxylated tallow amine (10%) | 50 | 1 | good |
| 23 | 90 | ethoxylated fatty acid (10%) | 50 | 1 | no effect |
| 24 | 90 | naphthalene sulfonate (10%) | 50 | 1 | no effect |

While the illustrative embodiments of the invention have been described with particularity, it will be understood that various other modifications will be apparent to and can be readily made by those skilled in the art without departing from the spirit and scope of the invention. Accordingly, it is not intended that the scope of the claims appended hereto be limited to the example and descriptions set forth herein but rather that the claims be construed as encompassing all the features of patentable novelty which reside in the present invention, including all features which would be treated as equivalents thereof by those skilled in the art to which this invention pertains.

**Claims**

1. Composition effective in inhibiting $CO_2$ corrosion comprising an effective amount of a trithione and an effective amount of a suitable dispersant.

2. The composition of claim 1 wherein said trithione is 4-neopentyl-5-t-butyl-1,2-dithiole-3-thione.

3. The composition of claim 1 wherein said trithione is 4-polyisobutylene-1,2-dithiole-3-thione.

4. The composition of claim 1 wherein said dispersant is a cationic dispersant.

5. The composition of claim 4 wherein said dispersant is selected from the group consisting of quaternary amines, quaternary pyridines, sulfonium salts and phosphonium salts.

6. The composition of claim 5 wherein one of said quaternary amines is coco trimethyl ammonium chloride.

7. The composition of claim 4 wherein said dispersant is coco trimethyl ammonium chloride.

8. The composition of claim 1 wherein said dispersant is one which is susceptible to protonation to render said dispersant cationic when exposed to a sweet system.

9. The composition of claim 8 wherein said dispersant is selected from the group consisting of ethoxylated amines, Schiff's bases, alkyl polyamines and betaines.

10. The composition of claim 9 wherein one of said ethoxylated amines is an ethoxylated tallow amine.

11. The composition of claim 8 wherein said dispersant is an ethoxylated tallow amine.

12. Method of inhibiting $CO_2$ corrosion of ferrous metals in gas and oil wells characterized as sweet systems comprising contacting said metals with an effective amount of a composition of claim 1.

European Patent Office

# EUROPEAN SEARCH REPORT

Application Number

EP 87 31 0721

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 339 349 (R.L. MARTIN) * Claim 1; column 8, line 50 - column 9, line 18; column 20, line 64 - column 23, line 30 * --- | 1,2,4-7 | C 23 F 11/10<br>E 21 B 41/02 |
| D,Y | US-A-3 350 408 (R.L. HODGSON) * Column 3, lines 41-60 * --- | 1,4-10 | |
| Y | US-A-3 457 185 (R.J. BETTY) * Claims 6-10 * --- | 1,4-7 | |
| Y | US-A-4 435 361 (M.G. DAGUE) * Column 1, lines 51-61 * --- | 1,8-10 | |
| D,A | US-A-3 959 313 (B.A. OUDE ALINK) * Claims 1-5 * --- | 2,3 | |
| A | FR-A-2 157 777 (MARATHON OIL COMPANY) * Revendication 1, points b,c; page 3, line 31 - page 4, line 22 * ----- | 4-10 | |
| | | | TECHNICAL FIELDS SEARCHED (Int. Cl.4) |
| | | | C 23 F 11/00<br>E 21 B 41/00 |

The present search report has been drawn up for all claims

| Place of search | Date of completion of the search | Examiner |
|---|---|---|
| THE HAGUE | 07-04-1988 | TORFS F.M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)